# EUROPEAN PATENT SPECIFICATION

(11) **EP 4 271 199 B1**
(45) Date of publication and mention of the grant of the patent: **25.02.2026**
(21) Application number: 21914894.7
(22) Date of filing: 11.11.2021
(51) Int. Cl.: A23J 1/14, A23K 20/147, A23L 33/185, A23P 10/40, A23J 3/14, A23K 10/30

(54) **PROCESS OF PREPARING HIGH PROTEIN GUAR MEAL**
VERFAHREN ZUR HERSTELLUNG EINES GUARMEHLS MIT HOHEM PROTEINGEHALT
PROCÉDÉ POUR OBTENIR UN POUDRE DE GUAR À HAUTE TENEUR EN PROTÉINES

(30) Priority: 30.12.2020 IN 202011057357
(43) Date of publication of application: 08.11.2023
(73) Proprietor: Shree Ram India Gums Pvt.Ltd., Jodhpur 342012, Rajasthan (IN)
(72) Inventor: SONI, Aakash, Jodhpur 342001 (IN)
(74) Representative: MacLachlan IP Limited
(86) International application number: PCT/IN2021/051064
(87) International publication number: WO 2022/144916

(56) References cited:
- WO-A1-2019/021306
- WO-A1-2019/021306
- IN-A- 201611 024 281
- IN-A- 201611 024 281
- IN-A- 201821 043 908
- US-A1- 2007 092 631
- US-A1- 2010 136 173
- US-A1- 2016 235 645
- RAZIA TASNEEM ET AL: "Functional Properties of Guar Seed (Cyamopsis tetragonoloba) Meal Detoxified by Different Methods", JOURNAL OF FOOD SCIENCE,, vol. 47, no. 4, 1 July 1982 (1982-07-01), pages 1323 - 1328, XP001350104
- NATH, J.P . ET AL.: "Functional Properties of Guar Proteins", JOURNAL OF FOOD SCIENCE, vol. 46, 1981, pages 1255 - 1259, XP002272557, DOI: 10.1111/j.1365-2621.1981.tb03034.x
- TASNEEM, R. ET AL.: "Functional Properties of Guar Seed (Cyamopsis tetragonoloba) Meal Detoxified by Different Method s", JOURNAL OF FOOD SCIENCE, vol. 47, no. 4, 1982, pages 1323 - 1328, XP001350104
- NATH, J.P ET AL.: "Extraction and Separation of Guar Seed Proteins", JOURNAL OF AGRICULTURAL AND FOOD CHEMISTRY, vol. 26, no. 5, 1978, pages 1243 - 1246, XP055215543, DOI: 10.1021/jf60219a043
- TASNEEM, R. ET AL.: "Nutritional quality of aqueous alcohol extracted guar (Cyamopsis tetragonoloba) meals", JOURNAL OF AGRICULTURAL AND FOOD CHEMISTRY, vol. 38, 1990, pages 1926 - 1929, XP000159843, DOI: 10.1021/jf00100a010
- SUBRAMANIAN, N. ET AL.: "Processing of guar to obtain high grade protein concentrate", FAO/WHO/UNICEF PROTEIN ADVISORY GROUP, SEPTEMBER 1969 MEETING, September 1969 (1969-09-01), Geneva, pages 1 - 9

## Description

### Field of the Invention

The present invention relates to a process for obtaining high nutritious protein fractions extracted from guar Korma meal and its use in the food & feed industry. These products and their formulations are of particular interest in the field of Food, Pharmaceuticals, Industry especially for the production of protein related products and animal feed mainly used as poultry and cattle feed and as high nutritious guar meal and its preparation thereof.

### Background of the Invention

Guar gum is from guar (guar) (also called guar (clusterbean)) plant (Cyamopsis tetragonoloba Taub (liter)) of the endosperm. Guar seed germ or cluster bean germ, is an annual legume which is the source of guar gum. Guar seeds have three parts seed coat-hull, endosperm and germ. The ground endosperm of guar beans is called guar gum. Guar seeds are the final farm produce of the guar crop, which are dehusked and milled to obtain guar gum. After 90-120 days, guar attains maturity which can be identified by the color change to yellow after which Guar is collected and seeds are separated from pod with the help of machine. Guar seeds can be stored in natural climatic condition for about two years.

Guar gum and guar meal are both extracted from seeds of the same plant, yet the gum form of extraction is used for its multiple properties. The use of guar extracts is known and is used in several industries. Guar gum is used as a thickener in the textile and explosives sector; as a binder in the paper industry; as a flocculent in ore extraction; as an aid in natural gas and oil production; as stabilizer to increase storage stability in the pharmaceutical and cosmetic sectors; and as a thickener, emulsifier and co-stabilizer in the food sector and food technology use. Although Guar gum is already widely used in several industries, its degree of purity and, with it, its physical and physiological properties. The purity of the guar gum is particularly important for its use in the food sector.

The by-product of guar gum industry called guar meal consists of seed coat and germ material Guar meal contains highest protein content for which it is preferred in animal feed preparations and comes in two forms: Guar meal churi and Guar meal korma "The guar meal is a potential source of protein as it contains 35 to 47.5% crude protein, which is one and a half times more than the level of protein in the whole guar seed." Among other things, guar gum has also proven to be an ideal dietary aid since the human stomach and small intestine enzymes do not attack its building blocks, the so-called galactomannans. Lower quality and quantity of protein in traditional Indian diets result in widespread protein malnutrition among children and adults. Guar meal has been well recognized for its high nutritive value but the phospholipids or fat soluble compounds contained in it, makes it unfit for human consumption due its pungent and prohibitive off flavor and bitter taste A process needs to be standardized for the preparation of an off-flavour free Guar Meal Flour so that it can be enriched in commonly consumed food products to enhance the protein content of the final product and make them commercially accepted health foods.

Razia Tasneem et al. (in: "Functional Properties of Guar Seed (Cyamopsis tetragonoloba) Meal Detoxified by Different Methods", Journal of Food Science, vol. 47, no. 4, July 1982) disclose that detoxified guar meal, obtained by autoclaving or solvent/acid extraction, exhibits altered functional properties compared to defatted soy meal, including reduced nitrogen solubility, increased water absorption, variable emulsification and fat absorption capacities, and improved foaming in isopropanol-extracted samples.

Indian Patent Application IN201611024281 involves "a novel process of removing unpleasant flavor and prohibited taste causing factors from guar meal using solvents such as ethyl alcohol, hexane, gamma valerolactone (GVL) and limonene thereby the resultant nearly defatted, debittered and off-flavor free flour rich in protein content can be a potential protein supplement of plant origin with higher economic value, as compared to animal proteins, that can be used to enrich various food preparations to get human edible high protein products."

Further, guar proteins can be extracted by using suitable solvents followed by acid precipitation to prepare guar protein isolate which can be also be supplemented in extruded snacks and bakery products after optimum standardization. **Indian Patent Application** IN201821020576 discloses a "method for detoxification of guar gum from the haemagglutinin. Haemagglutinin is a protein having molecular weight 10000 to 124000 and present in beans such as caster, soy, kidney, black lentils, peas and guar germ meal, which impaired growth and food utilization, agglutination of erythrocytes in vitro; thus to remove it from guar gum a treatment of the water by soaking it in predetermined time or treatment with aqueous salt solution of alkali or alkali chloride, bicarbonate salts tested, further the method by roasting at an elevated temperature is also determined to eliminate haemagglutinin"

Furthermore, there is a constant need in industry for new compositions, and extraction processes. Existing technology doesn't help to increase the protein above 58 to 60% in guar korma. Therefore, there exists a need for a modified guar germ having at least 65% of complete protein and which is deprived of all the side effects such as anti-nutritional factors, irritable and unpleasant smell, bitter taste, and so on. None of the above inventions and patents, taken either singularly or in combination, is seen to describe the present invention as claimed.

### Summary of the Invention:

Therefore, it is the main object of the present invention to provide a simplified and innovative process of preparing High Protein Guar Meal, Guar Oil and Polysaccharide, Plant Based Protein Powder to improve its commercial value, utility by extraction of anti nutritional factor, fat and other impurities to achieve high level of protein percentage that is atleast 70% of complete protein from the guar gum meal that can be used for human consumption, animal feed, etc.

Another object of the invention is not only to increase the protein percentage but to reduce the wastage and increase the digestibility, texture and palatability by removing anti nutritional factors like trypsin inhibitor.

Further the object of the invention is to make it beneficial for aquaculture, poultry, pet and cattle feed.

Furthermore it is object of the invention is also to get use of the by products i.e. oil and polysaccharides which are found to be useful for feed and food industry.

These and other objects of the invention will be appreciated by reference to the summary of the invention and to the detailed description of the preferred embodiment that follow, it being understood that not all objects are necessarily simultaneously attained by each aspect of the invention, and that not all objects are necessarily fulfilled by each claim of the application.

### Brief Description of the drawings.

Fig. 1: A process diagram of a preferred embodiment of the First stage of the method in accordance with the present invention.
Fig. 2: A process diagram of a preferred embodiment of the method used to achieve the final product used for animal feed in accordance with the present invention.
Fig. 3: A process diagram of a preferred embodiment of the method used to achieve the final product used for human consumption in accordance with the present invention.

### Detailed Description of the Invention:

The following paragraphs describe preferred embodiments of the process according to the present invention. It will be obvious to a person of ordinary skill in the art and will be aware that the activities described are only exemplary and several variations are possible, all of which are understood to fall within the scope of this disclosure. In other instances, common known processes are shown in block diagram form in order to facilitate describing the subject innovation. Accordingly, the specification and figures are to be regarded in an illustrative rather than a restrictive sense, and all such modifications are intended to be included within the scope of present invention. Any benefits, advantages, or solution to problems that are described herein with regard to specific embodiments are not intended to be construed as a critical, required or essential feature or element of any or all the claims.

Guar gum and meal are both extracted from seeds of the same plant, out of which Guar meal is one of the important ingredients used as cattle feed. Guar meal is purely an agricultural product that is grown without the influence of chemicals or preservatives and is naturally rich in protein and carbohydrates. Processed form of this product can be applied either in combination with other animal feed ingredients or directly as an important material as it is a very efficient nutritional food for animals. It has now been found that guar protein extract and its derivatives have properties, which are beneficial in the Food Sector for human consumption as well.

The meal of this crop is available in different types which includes,
- Guar Meal Churi-This is available in coarse form which is considered to be one of the most nutritious ingredients for animals and is also rich in protein. It is produced without the influence of any chemicals thus it remains a completely safe to use merchandize in animal feed industry.
- Guar Meal Korma-This is available in granular form which is primarily used as an important raw material in the production of animal feeds, especially for cattle, fish, poultry, swine, etc. The processed form of this product is suitable to feed animals and it suits better than the one in unprocessed condition.

The present invention relates to simplified and innovative process of preparing High Protein Guar Meal, Guar Oil and Polysaccharide, Plant Based Protein Powder to improve its commercial value, utility by extraction of anti nutritional factor, fat and other impurities to achieve high level of protein percentage which comprises of the following common steps used for both human consumption and animal feed:

### Step 1: Cleaning of Guar Meal (korma)

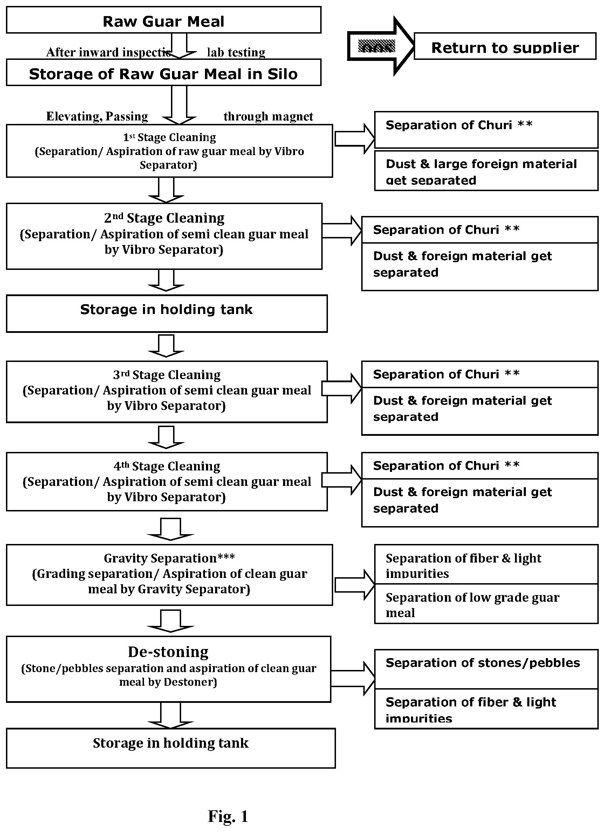

Figure 1 details out the separation process in achieving high grade Guar Gum meal as part of the process.
- Before cleaning of guar meal (korma) a thorough inspection & Lab testing is carried out to make sure the Raw Guar Meal is according to the standards and then stored for further process.
- Cleaning of guar meal (korma) is carried out in four different stages using any of the methods as per Fig. 1. As shown in Fig. 1, using Separation/Aspiration of semi clean guar meal by Vibro Separator removes dust, foreign materials, churi and other impurities, thus improves the quality of the product.
- After 4 stages of cleaning the product is further processed to remove fiber and light impurities and stones / pebbles and low grade guar meal in accordance with the present invention using Gravity and de stoning methods. The final clean guar meal is stored in a tank before extraction and thus at this stage the protein level in guar gum meal is between 55% to 60% in accordance with the present invention.

### Step 2: Separation of Impurities by reaction with a polar solvent

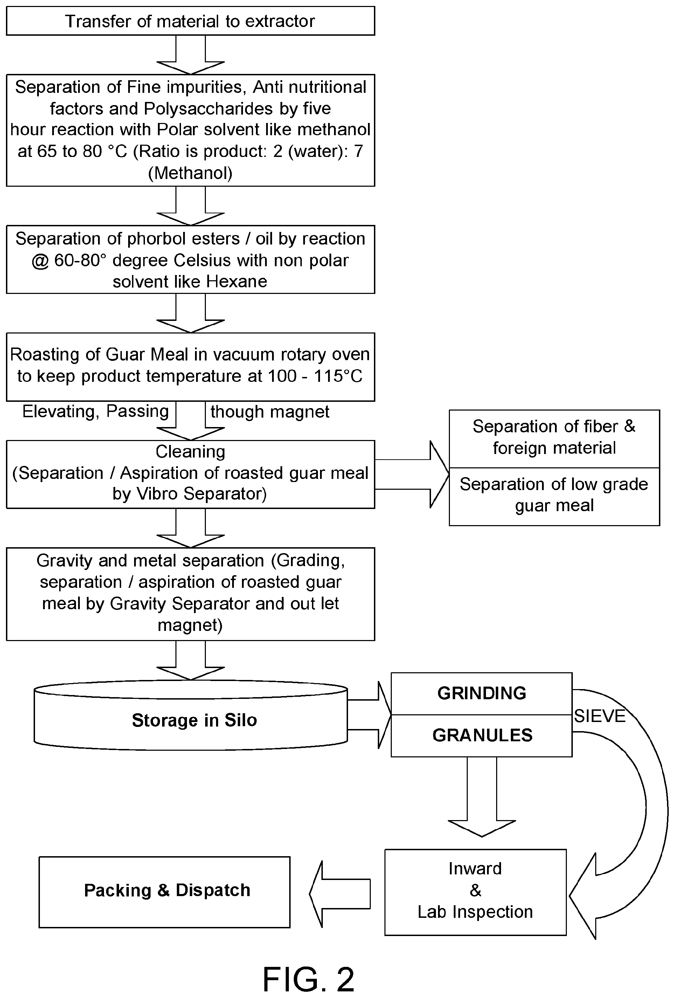

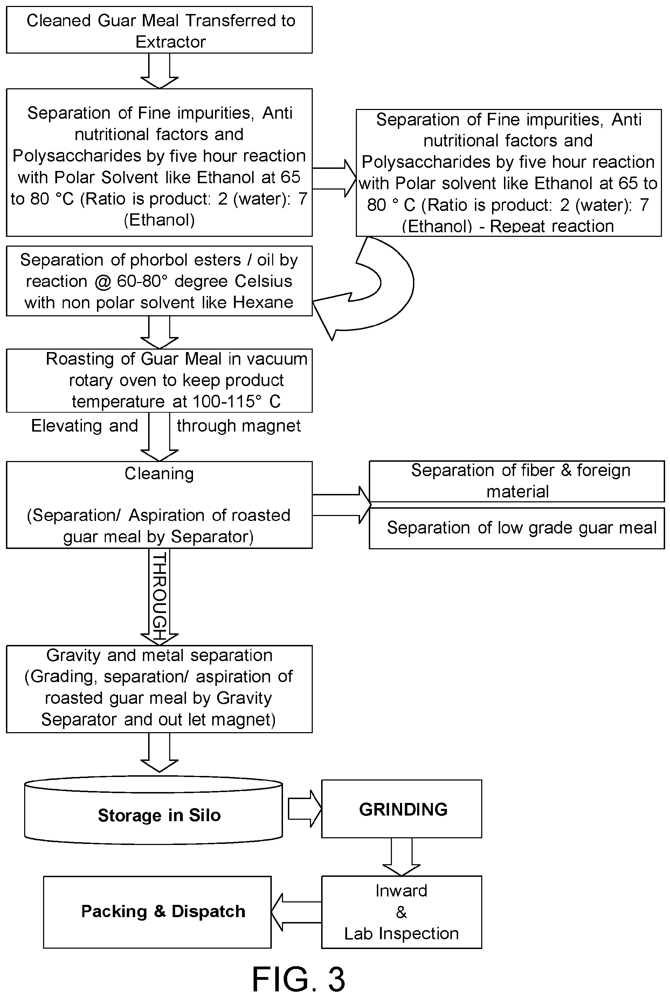

- This step is different for the process in accordance with the present invention wherein the final product is used for human consumption or animal feed.
- For Animal Feed: As shown in Fig. 2 the cleaned high grade guar meal is then transferred to extractor to separate fine Impurities, Anti nutritional factors and Polysaccharides by five hour reaction with methanol at 65 to 80 °C (Ratio is product: 2 (water): 7 (Methanol). This reaction is not repeated again and at this stage the protein level in guar gum meal is 68% to 72%.
- For Human Consumption: As shown in Fig. 3 the cleaned high grade guar meal is then transferred to extractor to separate fine Impurities, Anti nutritional factors and Polysaccharides by five hour reaction with methanol at 65 to 80°C (Ratio is product: 2 (water): 7 (ethanol). This reaction is repeated again and at this stage the protein level in guar gum meal is 65% to 75%.

### Step 3: Separation of Impurities using a non polar solvent

- As per Fig. 2 the processed product is then again reacted with another solvent (hexane) to separate phorbol esters / oil by reaction @ 60-80° degrees Celsius. At this stage the protein level in guar gum meal is 75% to 85%.
- Similarly for Human Consumption, as shown in Fig. 3 the processed product is then again reacted with another non polar solvent (like hexane) to separate phorbol esters / oil by reaction @ 60-80° degrees Celsius. At this stage the protein level in guar gum meal is 80% to 85%.

### Step 4: Roasting/Spray drying into Final product

- The processed material is transferred to rotary vacuum at 100-115°C temperature for roasting Or
- The processed material can be spray dried using hot air spray drying at 150-250°C which results into final product.
- The final product is again passed through Gravity Separator and then its ready for dispatch.

- The final product will be with low density with protein level between 80% to 85%.

The final product achieved by the above mentioned process is high in protein level having good digestibility, good amino acid profile, better texture and increase in palatability. Final product prepared in accordance with the present invention can be in powder form/granular form and can be used for human consumption and/or animal feed.

### Difference in the Process:

### For Human Consumption:

There is an additional step to grind the material to make powder and then only proceed to step 2 as disclosed above for achieving the final product for human consumption. Additionally after the first separation process with polar solvent it is repeated again and thus the level of protein in the end is higher and is 80% to 85%.

The final product achieved in accordance with the process of the present invention can be used for human consumption in products like Protein Powder for men and women, Protein Powder for Kids, Protein Bars, Protein Biscuits, Protein Shakes, Protein supplements.

### For Animal Feed:

The process explained in Fig. 1 and Fig.2 is carried out and the polar solvent used incase of animal feed consumption is Methanol and the step 2 is only carried out once wherein the final product in accordance with the process of present invention is a polysaccharide for animal feed with inositol as growth enchancer and used for various feeds like Fish Feed, Pet Food-Dog and Cat, Poultry Feed Pellets, and Cattle Feed Pellets.

### Examples

### Example 1:

- When we put 100 kgs of raw guar meal as input in the process, from 1^{st} stage to 4^{th} stage of cleaning- 19% of the churi, dust and foreign material gets removed.
- While passing the material through gravity and de-stoning another 11% of the impurities like fiber ,stones / pebbles gets removed.
- After completing cleaning, gravity and destoning we get 70 kgs as cleaned guar meal.
- This 70 Kgs is transferred to extractor for separation of fine impurities, anti nutritional factors and polysaccharides with polar solvent i.e., methanol. After this reaction we get 55 kgs material as output i.e., there is a process loss of 15 Kgs approx (21-22%).
- Further, 55 Kgs is put to another reaction with non polar solvent i.e., Hexane and the output product is 50 kgs.
- The product extracted in accordance with the present invention is spray dried at 150-250°C.
- After further cleaning and passing through magnet and gravity we get 45 kgs of finished material.
- The final material / product we get is in granule form and suitable for animal feed.

### Example 2:

- In food grade when we put 100 kgs of raw guar meal as input in the process, from 1^{st} stage to 4^{th} stage of cleaning- 19% of the churi ,dust and foreign material gets removed.
- While passing the material through gravity and de-stoning another 11% of the impurities like fiber ,stones / pebbles get removed.
- After completing cleaning, gravity and destoning we get 70 kgs as cleaned guar meal.
- This 70 Kgs is transferred to extractor for separation of fine impurities, anti-nutritional factors and polysaccharides with polar solvent i.e., ethanol. After this reaction we get 55 kg material as output i.e., there is a process loss of 15 kg approx.
- The above reaction with polar solvent like ethanol is again repeated for further purification and we get 53 kg material as output.
- Further,53 Kgs is put to another reaction with non polar solvent i.e., Hexane and the output product is 48 kg.
- The product extracted in accordance with the present invention is spray dried at 150-250°C.
- After further cleaning and passing through magnet and gravity we get 43 kgs of finished material.
- To make it suitable for human consumption we grind it to make powder. Here during this process there is a loss of 1% and we get 42 Kgs of final product.

The final product obtained by the above mentioned process is high in protein level having good digestibility, good amino acid profile, better texture and increase in palatability. The present invention provides a simplified and innovative process of preparing High Protein Guar Meal, Guar Oil and Polysaccharide, Plant Based Protein Powder to improve its commercial value, utility by extraction of anti nutritional factor, fat and other impurities to achieve high level of protein percentage from the guar gum meal that can be used for human consumption, animal feed, etc. The process in accordance with present invention not only increases the protein percentage but also reduces the wastage and increase the digestibility, texture and palatability by removing anti nutritional factors like trypsin inhibitor. The final products achieved in accordance with the present invention is beneficial for aquaculture, poultry, pet, cattle feed and is highly suitable for human consumption as well.

It will be appreciated by persons skilled in the art that the invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A process of preparing plant based high protein guar meal, guar oil, polysaccharide, and powder by extracting anti-nutritional factor, fat and other impurities, wherein the process comprises of following steps:
(i) cleaning of guar Korma meal using gravity, destoner and vibro separator to remove fiber, light impurities and stones or pebbles;
(ii) separating impurities, anti nutritional factors and polysaccharides from cleaned product obtained in step (i) using polar solvent and H₂O by reacting at 65 to 80° Celsius for at-least five hours;
(iii) separating phorbol esters or oil from processed product obtained in step (ii) using non-polar solvent by reacting at 60 to 80° Celsius;
(iv) roasting or spray drying, and grinding of processed product obtained in step (iii) to obtain final product, wherein the roasting is done using rotary vacuum at 100-115°C temperature and is cleaned using gravity to obtain the final product, wherein the final product has the protein level of 75% to 85% which is used as protein supplement in animal feed, aquaculture, pet food and human consumption.

2. The process according to Claim 1, wherein the polar solvent is Methanol or Ethanol.

3. The process according to Claim 1, wherein the non-polar solvent is Hexane, Benzene or Chloroform.

4. The process according to Claim 1, wherein the cleaning step (i) of guar Korma meal provides the processed product having protein level of 55% to 60%.

5. The process according to Claim 1, wherein the step (ii) provides processed product with protein level of 68% to 72%.

6. The process according to claim 1, wherein the step (iii) provide 75% to 85% protein level to the processed product.

7. The process according to Claim 1, wherein the final product with protein level of 75% to 85% is obtained.

8. The process according to claim 1, wherein the spray drying at step (iv) is done using hot air spray at 150-250°C to obtain the final product with low density and protein level of 75% to 85%.

9. The process according to Claim 1, wherein the final product is obtained in powder form or granular form and has the protein level of 75% to 85%.

## Patentansprüche

1. Verfahren zur Herstellung eines Guarmehls, Guaröls, Polysaccharids und Pulvers auf pflanzlicher Basis durch Extrahieren von Anti-Ernährungsfaktor, Fett und anderen Verunreinigungen, wobei das Verfahren die folgenden Schritte umfasst:
(i) Reinigen von Guar-Korma-Mehl unter Verwendung von Schwerkraft, Entsteiner und Vibro-Separator, um Fasern, leichte Verunreinigungen und Steine oder Kieselsteine zu entfernen;
(ii) Abtrennen von Verunreinigungen, Anti-Ernährungsfaktoren und Polysacchariden aus dem in Schritt (i) erhaltenen gereinigten Produkt unter Verwendung von polarem Lösungsmittel und H₂O durch Umsetzen bei 65 bis 80 ° Celsius für zumindest fünf Stunden;
(iii) Abtrennen von Phorbolestern oder Öl aus dem in Schritt (ii) erhaltenen verarbeiteten Produkt unter Verwendung von unpolarem Lösungsmittel durch Umsetzen bei 60 bis 80 ° Celsius;
(iv) Rösten oder Sprühtrocknen und Mahlen des in Schritt (iii) erhaltenen verarbeiteten Produkts, um ein Endprodukt zu erhalten, wobei das Rösten unter Verwendung von Rotationsvakuum bei 100-115 °C Temperatur durchgeführt wird und unter Verwendung von Schwerkraft gereinigt wird, um das Endprodukt zu erhalten, wobei das Endprodukt den Proteingehalt von 75 % bis 85 % aufweist, welcher als Proteinergänzung in Tierfutter, Aquakultur, Haustierfutter und menschlichem Verzehr verwendet wird.

2. Verfahren nach Anspruch 1, wobei das polare Lösungsmittel Methanol oder Ethanol ist.

3. Verfahren nach Anspruch 1, wobei das unpolare Lösungsmittel Hexan, Benzol oder Chloroform ist.

4. Verfahren nach Anspruch 1, wobei der Reinigungsschritt (i) von Guar-Korma-Mehl das verarbeitete Produkt mit einem Proteingehalt von 55 % bis 60 % bereitstellt.

5. Verfahren nach Anspruch 1, wobei der Schritt (ii) verarbeitetes Produkt mit einem Proteingehalt von 68 % bis 72 % bereitstellt.

6. Verfahren nach Anspruch 1, wobei der Schritt (iii) dem verarbeiteten Produkt einen Proteingehalt von 75 % bis 85 % bereitstellt.

7. Verfahren nach Anspruch 1, wobei das Endprodukt mit einem Proteingehalt von 75 % bis 85 % erhalten wird.

8. Verfahren nach Anspruch 1, wobei das Sprühtrocknen bei Schritt (iv) unter Verwendung von Heißluftsprüh bei 150-250 °C durchgeführt wird, um das Endprodukt mit niedriger Dichte und einem Proteingehalt von 75 % bis 85 % zu erhalten.

9. Verfahren nach Anspruch 1, wobei das Endprodukt in Pulverform oder Granulatform erhalten wird und den Proteingehalt von 75 % bis 85 % aufweist.

## Revendications

1. Procédé pour obtenir une farine de guar, de l'huile de guar, un polysaccharide et de la poudre à base de plantes par extraction de facteur anti-nutritionnel, de graisse et d'autres impuretés, dans lequel le procédé comprend les étapes suivantes :
(i) nettoyage de farine de guar Korma à l'aide de la gravité, d'un dispositif d'élimination de pierres et d'un séparateur vibratoire pour éliminer des fibres, des impuretés légères et des pierres ou des cailloux ;
(ii) séparation d'impuretés, de facteurs anti-nutritionnels et de polysaccharides du produit nettoyé obtenu à l'étape (i) à l'aide de solvant polaire et de H₂O en réagissant à 65 à 80 °Celsius pendant au moins cinq heures ;
(iii) séparation d'esters de phorbol ou d'huile du produit traité obtenu à l'étape (ii) à l'aide de solvant non polaire par réaction à 60 à 80 °Celsius ;
(iv) torréfaction ou séchage par pulvérisation, et broyage du produit traité obtenu à l'étape (iii) pour obtenir le produit final, dans lequel la torréfaction est effectuée à l'aide d'un vide rotatif à une température de 100 à 115 °C et il est nettoyé par gravité pour obtenir le produit final, dans lequel le produit final présente un taux de protéines de 75 % à 85 % qui est utilisé comme supplément de protéines dans l'alimentation animale, l'aquaculture, l'alimentation pour animaux de compagnie et la consommation humaine.

2. Procédé selon la revendication 1, dans lequel le solvant polaire est le méthanol ou l'éthanol.

3. Procédé selon la revendication 1, dans lequel le solvant non polaire est l'hexane, le benzène ou le chloroforme.

4. Procédé selon la revendication 1, dans lequel l'étape de nettoyage (i) de la farine de guar Korma fournit le produit traité comportant un taux de protéines de 55 % à 60 %.

5. Procédé selon la revendication 1, dans lequel l'étape (ii) fournit un produit traité avec un taux de protéines de 68 % à 72 %.

6. Procédé selon la revendication 1, dans lequel l'étape (iii) fournit un niveau de protéine de 75 % à 85 % au produit traité.

7. Procédé selon la revendication 1, dans lequel le produit final avec un taux de protéines de 75 % à 85 % est obtenu.

8. Procédé selon la revendication 1, dans lequel le séchage par pulvérisation à l'étape (iv) est effectué à l'aide d'une pulvérisation à l'air chaud à 150 à 250 °C pour obtenir le produit final avec une faible densité et un taux de protéines de 75 % à 85 %.

9. Procédé selon la revendication 1, dans lequel le produit final est obtenu sous forme de poudre ou sous forme de granulés et comporte un taux de protéines de 75 % à 85 %.
